# EUROPÄISCHE PATENTSCHRIFT

(11) **EP 2 551 624 B1**
(45) Veröffentlichungstag und Bekanntmachung des Hinweises auf die Patenterteilung: **01.04.2020**
(21) Anmeldenummer: 11170164.5
(22) Anmeldetag: 29.07.2011
(51) Int. Cl.: F01M 5/02, F01M 11/00, F01P 11/20, F28D 20/00

(54) **WÄRMESPEICHER**
HEAT ACCUMULATOR
ACCUMULATEUR THERMIQUE

(43) Veröffentlichungstag der Anmeldung: 30.01.2013
(73) Patentinhaber: MAHLE Behr GmbH & Co. KG, 70469 Stuttgart (DE)
(72) Erfinder: Eilemann, Andreas, 71729 Erdmannhausen (DE); Ignjatovic, Spasoje, 75428 Illingen (DE); Koelblin, Rüdiger, 73732 Esslingen (DE)
(74) Vertreter: Grauel, Andreas

(56) Entgegenhaltungen:
- DE-A1- 3 032 090
- DE-A1-102005 052 632
- DE-A1-102008 059 619
- JP-A- 10 008 955
- JP-A- 2000 199 416
- JP-A- 2002 188 422
- JP-A- 2006 183 943
- JP-U- H0 630 674
- US-A1- 2009 039 089

## Beschreibung

Die Erfindung betrifft einen Wärmespeicher.

Wärmespeicher, insbesondere zur Verwendung in einem Kraftfahrzeug, sind in einer Vielzahl aus dem Stand der Technik bekannt.

Ein bekannter Wärmespeichertyp, der auch für den Einsatz in Kraftfahrzeugen konzipiert und realisiert ist, ist beispielsweise der Latentwärmespeicher, der aus einem Innenbehälter, dem Speicherkern, in dem sich ein Wärmespeichermittel, z.B. ein Speichersalz, befindet und aus einem Außenbehälter mit einer dazwischen vorgesehenen Wärmeisolation besteht. Beispielsweise werden die bekannten Wärmespeichertypen für eine Wärmeisolation des Motoröls oder des Kühlwassers vorgesehen. Nachteilig an den bekannten Wärmespeichern ist jedoch, dass die Wärmespeicher aufgrund der Materialwahl (zumeist Edelstahl) einem hohen konstruktiven Aufwand bei gleichzeitig erhöhten Herstellungskosten unterliegen und aufgrund ihrer technischen Ausgestaltung aufwendige Betriebsprozesse notwendig sind.

Die DE 10 2005 052 632 A1 offenbart eine Kraftmaschine mit einem Schmierölkreislauf und mit einem Ölwärmespeicher.

Die JP 2000 199416 A offenbart eine Ölwanne mit Wärmerückhaltevermögen.

Die JP 2002 188422 A offenbart eine Schmierölversorgung eines Verbrennungsmotors, bei welchem Öl bei hoher Temperatur gegenüber anderen Teilen des Verbrennungsmotors wärmeisoliert ist.

Derartige Wärmespeicher lassen somit im Hinblick auf ihre konstruktive und technische Ausgestaltung noch Wünsche offen.

Es ist daher Aufgabe der Erfindung, verbesserte Wärmespeicher zur Verfügung zu stellen.

Diese Aufgabe wird gelöst durch einen Wärmespeicher mit den Merkmalen des Anspruchs 1. Vorteilhafte Ausgestaltungen sind Gegenstand der Unteransprüche.

Gelöst wird die Aufgabe erfindungsgemäß dadurch, dass der Wärmespeicher, insbesondere zur Verwendung in einem Kraftfahrzeug, mit einem in den Motoröl-Kreislauf einbindbaren, bei laufendem Motor von dem Motoröl durchströmten und bei abgeschaltetem Motor von dem Kreislauf abgekoppelten Wärmespeicherbehälter versehen ist, wobei als Wärmespeicherbehälter die Ölwanne des Motors in ihrem unteren Teil vorgesehen und mit wärmeisolierenden Behälterwänden versehen ist. Ein Teil bzw. Bereich der Ölwanne fungiert somit als Wärmespeicher, wobei in dem Wärmespeicher das heiße Öl gespeichert werden kann wenn der Motor abgestellt wird. Wird der Motor wieder gestartet oder das Fahrzeug geöffnet, kann das heiße gespeicherte Motoröl zurück in den Motor gepumpt bzw. gefördert werden. Die Absperrung des heißen Motoröls im Wärmespeicherbehälter kann über zumindest ein Ventil oder dergleichen erfolgen. Mit Hilfe des Wärmespeicherbehälters ist ein schnelleres Aufheizen des Innenraums durch schnelleres Erhitzen des Motoröls sowie ein geringerer Kraftstoffverbrauch in der Kaltlaufphase (weniger Reibung im Motor durch warmes Motoröl) realisierbar. Die Ölwanne ist hierbei im Wesentlichen einstückig ausgebildet und beinhaltet in einem unteren Teilbereich den Wärmespeicherbehälter.

Erfindungsgemäß besteht der Wärmespeicherbehälter aus wärmeisolierenden Behälterwänden aus zueinander, insbesondere zylindrischen, inneren bzw. äußeren Behältern mit jeweils zwischenliegender Wärmeisolierschicht.

Beispielsweise sind zwei zylindrische geschlossene Behälter aus Kunststoff oder anderen geeigneten Materialien vorgesehen, wobei ein Behälter größer und ein Behälter kleiner ausgebildet ist, dergestalt, dass der größere Behälter zur Aufnahme des kleineren Behälters geeignet ist, wobei zwischen der äußeren Behälterwand des kleinen Behälters und der inneren Behälterwand des größeren Behälters eine wärmeisolierende Zwischenschicht vorgesehen ist (Thermoskannen-Prinzip). In dem größeren Behälter befindet sich, in der geschilderten Ausführung, ein kleiner Behälter. Zur Verbesserung der Wärmedämmung ist der dazwischenliegende Zwischenraum evakuiert. Durch beispielsweise eine Beschichtung oder Verspiegelung der dem Nutzinhalt zugewandten Seite, kann der Wärmeverlust durch Reflexion der Wärmestrahlung weiter vermindert werden. Durch diese Konstruktion wird der Wärmeausgleich zwischen innen und außen, der sowohl durch Wärmeleitung, Wärmestrahlung als auch durch Konvektion erfolgen kann, verringert.

Beispielsweise kann vorgesehen sein, dass der innere Behälter von dem jeweiligen Wärmespeichermedium bei laufendem Motor durchströmt und bei dessen Abschaltung im Sinne eines thermisch isolierten speicherbaren Wärmereservoirs abkoppelbar ist. Beispielsweise kann der innere Behälter zwei oder mehr Stutzen, oder dergleichen aufweisen, die an den Kühlmittel-kreislauf angeschlossen sind und durch geeignete Öffnungen im äußeren Behälter nach außen geführt werden können. Die Anschlüsse selber können ebenfalls von innen isoliert werden, um Wärmeverluste zu verringern. Ferner können zu Abgrenzungs- oder Absperrzwecken Ventile, insbesondere Rückschlagventile, oder Schwimmer oder dergleichen vorgesehen sein, so dass sich durch den Wärmespeicher ein in sich komplett isoliertes und thermisch abgeschlossenes System ergibt.

Eine bevorzugte Ausführungsform sieht vor, dass eine Wärme-Isolierschicht in Form einer Kunststoff-Isolierschicht vorgesehen sein kann. Eine weitere bevorzugte Ausführungsform sieht vor, dass eine Wärme-Isolierschicht in Form einer Luft-Isolierschicht vorgesehen sein kann. Beispielsweise können als Isolationsschicht ferner Schaum, Styropor, Kieselsäure oder beispielsweise Vakuumplatten zum Einsatz kommen. Beispielsweise kann ein paneelartiger Aufbau eines Wärmespeicherbehälters vorgesehen sein, dergestalt, dass der Wärmespeicherbehälter eine Vielzahl von einzelnen durchströmten oder umströmten Isolationspaneelen (Vakuumpaneelen) aufweist.

Die Erfindung sieht vor, dass sowohl der innere als auch der äußere Behälter aus Kunststoff ausgebildet sind. Ferner ist die Wärmeisolierschicht zwischen den beiden Behältern als ein evakuierter Wärmedämmkörper ausgebildet. Derartige Wärmedämmkörper bestehen beispielsweise aus einem Kern aus gepresstem Kieselsäurepulver, der in einer Hochbarrierenfolie vakuumdicht verpackt beziehungsweise eingepackt ist. Die Form dieser Wärmedämmkörper ist bevorzugt plattenförmig, kann jedoch je nach Anwendungsfall fast jede beliebige Form einnehmen. Durch die Verwendung derartiger evakuierter Wärmedämmkörper kann insbesondere auf das Evakuieren des Raumes zwischen dem inneren und äußeren Behälter verzichtet werden. Somit kann insgesamt ein kostengünstiger Wärmespeicher zur Verfügung gestellt werden.

In einer weiteren bevorzugten Ausführungsform ist vorgesehen, dass die Einlassöffnung als ein Einlassstutzen und die Auslassöffnung als ein Auslassstutzen ausgebildet ist, wobei bevorzugt der Einlassstutzen und/oder der Auslassstutzen zumindest teilweise zwischen dem inneren und äußeren Behälter angeordnet ist.

In einer weiteren Ausführungsform umfasst der Wärmespeicher mehrere Kammern, die durch jeweils durch mindestens eine Öffnung kommunizierend miteinander verbunden sind. Somit ist es möglich durch die Größe der Öffnung das Entladeverhalten gezielt zu beeinflussen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Es zeigen:
- **Fig. 1**: die schematische Darstellung eines ersten erfindungsgemäßen Wärmespeichers;
- **Fig. 2**: die schematische Darstellung eines zweiten erfindungsgemäßen Wärmespeichers;
- **Fig. 3**: die schematische Darstellung eines dritten erfindungsgemäßen Wärmespeichers;
- **Fig. 4**: den Wärmespeicher gem. Fig. 3 in Draufsicht;

- **Fig. 5 und Fig. 6**: die schematische Darstellung eines weiteren erfindungsgemäßen Wärmespeichers.

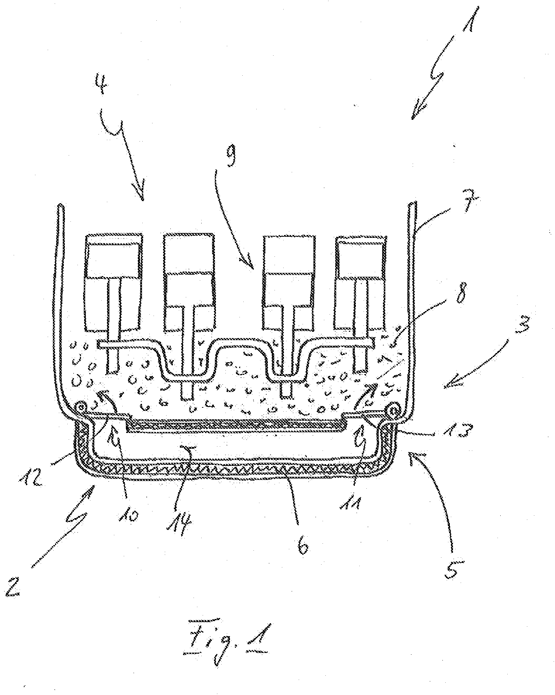

Fig. 1 zeigt einen Wärmespeicher 1, zur Verwendung in einem Kraftfahrzeug, wobei als Wärmespeicherbehälter 2 die Ölwanne 3 des Motors 4, insbesondere in ihrem unteren Teil 5, vorgesehen und mit wärmeisolierenden Behälterwänden 6 versehen ist.

Der Wärmespeicherbehälter 2 ist einstückig mit dem Motorgehäuse 7 hergestellt. Innerhalb des Motorgehäuses 7 ist eine Menge an Öl 8 vorhanden. Das Öl 8 befindet sich innerhalb des Motorgehäuses 7 und umgibt die innerhalb des Motorgehäuses 7 angeordneten Antriebselemente 9. Der Motor 4 befindet sich in der hier gezeigten schematischen Darstellung in einer Gebrauchsstellung bzw. im Wirkbetrieb.

Wird der Motor abgestellt, kann das innerhalb des Motorgehäuses 7 vorhandene Öl 8 über die Einlassöffnungen 10 und 11, welche mittels zweier Ventile 12, 13 verschlossen und freigebbar sind, in den Wärmespeicherbehälter 2 fließen und wird dort aufgrund der wärmeisolierenden Eigenschaften desselben warmgehalten. Wird das Kraftfahrzeug wieder gestartet oder werden die Türen geöffnet, kann das warme Öl 8 über einen nicht dargestellten Mechanismus, insbesondere eine Pumpe, zurück in das Motorgehäuse 7 gepumpt werden.

Insbesondere ist somit der innere Bereich 14 des Wärmespeicherbehälters 2 wärmeisoliert. Dieser innere Bereich 14 kann dauerdurchströmt sein (bei geöffneten Ventilen 12, 13) und nur bei abgestelltem Motor 4 verschlossen werden oder als extra Speicher dienen, der nur geöffnet wird, wenn der Motor 4 abgestellt wird.

Fig. 2 zeigt einen Wärmespeicher 15, zur Verwendung in einem Kraftfahrzeug, mit einem in den Motor-Kühlflüssigkeit-Kreislauf einbindbaren Wärmespeicherbehälter 16, wobei als Wärmespeicherbehälter 16 ein Zusatzbehälter vorgesehen ist, der mit wärmeisolierenden Behälterwänden 18, 19 aus zueinander, insbesondere zylindrischen, inneren bzw. äußeren Behältern 20, 21 mit jeweils zwischenliegender Wärmeisolierschicht 22 besteht.

Die Behälter 20, 21 sind aus Kunststoff gefertigt und weisen jeweils ein abnehmbares Deckelelement 23, 24 auf. Über Passstifte 25, 26 kann der innere Behälter 20 innerhalb des äußeren Behälters 21 fixiert werden. Das Deckelelement 24 weist zwei durch Öffnungen 30, 31 im Deckelelement 23 geführte Anschlussstutzen 27, 28 auf, über die der innere Behälter 20 an den Motor-Kühlmittel-Kreislauf anbindbar ist. Die Anschlussstutzen 27, 28 können mittels nicht dargestellter Ventile verschlossen und geöffnet werden. Innerhalb des Behälters 20 ist das Kühlwasser 29 wärmeisoliert gespeichert, welches bei Bedarf, z.B. beim Starten des Motors, über einen nicht dargestellten Mechanismus, insbesondere eine Pumpe, zurück in den Motor-Kühlflüssigkeit-Kreislauf befördert werden kann. Beispielsweise kann die Wärmeisolierschicht 22 aus Styropor bestehen.

Fig. 3 zeigt einen Wärmespeicher 32 bestehend aus Kunststoff und aufweisend mehrere innere und/oder äußere Isolationspaneele 33, durch die das warmzuhaltende Medium strömen kann. Fig. 4 zeigt den Wärmespeicher 32 in Draufsicht. Zu erkennen sind die beiden Anschlussstutzen 35 und 36, über die der Wärmespeicher 32 beispielsweise an einen Motor-Kühlflüssigkeit-Kreislauf, ähnlich wie unter Fig. 2 beschrieben, angeschlossen werden kann.

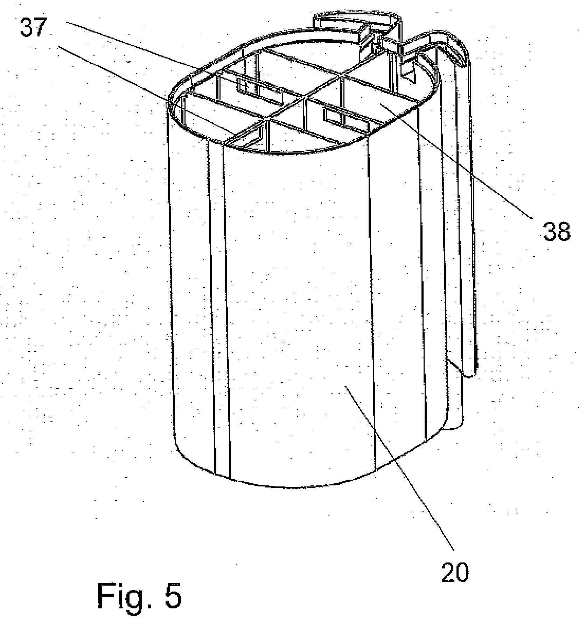

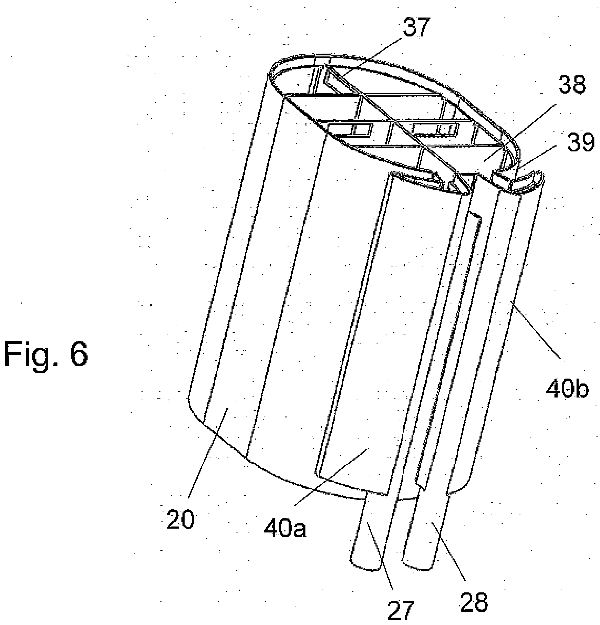

Die Fig. 5 und Fig.6 zeigen einen weiteren erfindungsgemäßen Wärmespeicher gemäß vorliegender Erfindung, wobei in den beiden Figuren der Übersichtlichkeit halber lediglich der innere Behälter 20 dargestellt ist. In Fig. 5 sind insbesondere mehrere Öffnungen 37 zu erkennen, durch die die Kühlflüssigkeit serpentinenartig durch die einzelnen Kammern 38 strömen kann. Jede der insgesamt acht Kammern ist somit durch eine Öffnung fluidisch mit einer benachbarten Kammer verbunden. Je nach Größe der einzelnen Öffnungen ist es somit möglich, das Entladeverhalten der Kühlflüssigkeit zu beeinflussen.

Fig. 6 zeigt den erfindungsgemäßen Wärmespeicher in einer Seitenansicht. Zu erkennen ist der Einlass- 27 beziehungsweise Auslassstutzen 28, die zwischen dem inneren 20 und dem nicht dargestellten äußeren Behälter angeordnet sind. Der Einlass- beziehungsweise Auslassstutzen münden jeweils in einen Einlass- 40a beziehungsweise Auslasskanal 40b, wobei der Einlassbeziehungsweise Auslasskanal derart ausgebildet ist, dass zwischen dem inneren Behälter 20 und den beiden Stutzen Freiräume 39 entstehen. Diese Freiräume 39 sind für eine nicht dargestellte Wärmeisolierschicht vorgesehen, so dass es möglich ist, den inneren Behälter 20 von den Stutzen thermisch zu entkoppeln. Zusätzlich wird durch Thermosiphons eine Temperaturschichtung zwischen der heißen Kühlflüssigkeit und den kalten Stutzen erzeugt. Somit kann insgesamt ein thermisches Entladen bei Stillstand der Kühlflüssigkeit vermieden werden.

## Patentansprüche

1. Wärmespeicher (1), insbesondere zur Verwendung in einem Kraftfahrzeug, mit einem in den Motoröl-Kreislauf einbindbaren, bei laufendem Motor (4) von dem Motoröl (8) durchströmten und bei abgeschaltetem Motor (4) von dem Kreislauf abgekoppelten Wärmespeicherbehälter (2), wobei als Wärmespeicherbehälter (2) eine Ölwanne (3) des Motors (4) in ihrem unteren Teil (5) vorgesehen und mit wärmeisolierenden Behälterwänden (6) versehen ist, wobei die wärmeisolierenden Behälterwände (18, 19) aus zueinander, insbesondere zylindrischen, inneren bzw. äußeren Behältern (20, 21) mit jeweils zwischenliegender Wärmeisolierschicht (22) ausgebildet sind, wobei der innere (20) und der äußere (21) Behälter aus Kunststoff ausgebildet sind und die Wärmeisolierschicht (22) als ein evakuierter Wärmedämmkörper ausgebildet ist.

2. Wärmespeicher nach Anspruch 1, **gekennzeichnet durch** ein ölgefülltes Getriebegehäuse, insbesondere Automatik-Getriebegehäuse, wobei das Getriebegehäuse als Wärmespeicherbehälter mitbenutzt und entsprechend ausgebildet ist.

3. Wärmespeicher nach Anspruch 1 oder 2, **dadurch gekennzeichnet, dass** der innere Behälter (20) von dem jeweiligen Wärmespeichermedium bei laufendem Motor durchströmt und bei dessen Abschaltung im Sinne eines thermisch isolierten speicherbaren Wärmereservoirs abkoppelbar ist.

4. Wärmespeicher nach einem der Ansprüche 1 bis 3, **dadurch gekennzeichnet, dass** der Wärmedämmkörper gepresstes Kieselsäurepulver umfasst.

5. Wärmespeicher nach einem der vorhergehenden Ansprüche, **dadurch gekennzeichnet, dass** die Einlassöffnung als ein Einlassstutzen (27, 35) und die Auslassöffnung als ein Auslassstutzen (28, 36) ausgebildet ist.

6. Wärmespeicher nach einem der vorhergehenden Ansprüche, **dadurch gekennzeichnet, dass** der Einlassstutzen und/oder der Auslassstutzen zumindest teilweise zwischen dem inneren und äußeren Behälter angeordnet ist.

7. Wärmespeicher nach einem der vorhergehenden Ansprüche, **dadurch gekennzeichnet, dass** der Wärmespeicher mehrere Kammern (38) umfasst, die jeweils durch zumindest eine Öffnung (37) kommunizierend miteinander verbunden sind.

## Claims

1. A heat accumulator (1), in particular for the use in a motor vehicle, with a heat accumulator container (2) which can be integrated into the engine oil cycle, through which the engine oil (8) flows when the engine (4) is running and which is decoupled from the cycle when the engine (4) is switched off, wherein an oil pan (3) of the engine (4) is provided as the heat accumulator container (2) in its lower part (5) and is provided with heat-insulating container walls (6), wherein the heat-insulating container walls (18, 19) are formed from inner and outer containers (20, 21) which are in particular cylindrical to one another, with a respective intermediate heat insulation layer (22), wherein the inner (20) and the outer (21) container are formed from plastic and the heat insulation layer (22) is formed as an evacuated heat insulation body.

2. The heat accumulator according to claim 1, **characterised by** an oil-filled gear housing, in particular an automatic gear housing, wherein the gear housing is also used as a heat accumulator container and is formed correspondingly.

3. The heat accumulator according to claim 1 or 2, **characterised in that** the respective heat accumulator medium flows through the inner container (20) when the engine is running and can be decoupled in the sense of a thermally insulated storable heat reservoir when it is switched off.

4. The heat accumulator according to one of claims 1 to 3, **characterised in that** the heat insulation body comprises pressed silica powder.

5. The heat accumulator according to one of the preceding claims, **characterised in that** the inlet opening is formed as an inlet nozzle (27, 35) and the outlet opening is formed as an outlet nozzle (28, 36) .

6. The heat accumulator according to one of the preceding claims, **characterised in that** the inlet nozzle and/or the outlet nozzle is at least partially arranged between the inner and the outer container.

7. The heat accumulator according to one of the preceding claims, **characterised in that** the heat accumulator comprises several chambers (38) which are respectively connected to one another in a communicating manner via at least one opening (37).

## Revendications

1. Accumulateur de chaleur (1), en particulier conçu pour l'utilisation dans un véhicule automobile, ledit accumulateur de chaleur comprenant un réservoir d'accumulateur de chaleur (2) pouvant être intégré au circuit d'huile de moteur, lequel réservoir est traversé par l'huile de moteur (8) quand le moteur (4) tourne et est désaccouplé du circuit quand le moteur (4) est à l'arrêt, où un carter d'huile (3) du moteur (4) est prévu dans la partie inférieure (5) dudit carter d'huile fonctionnant comme un réservoir d'accumulateur de chaleur (2) et est doté de parois de réservoir (6) thermoisolantes, où les parois thermoisolantes (18, 19) du réservoir sont configurées en se composant de réservoirs (20, 21), en particulier cylindriques, respectivement intérieur ou extérieur l'un par rapport à l'autre, comprenant à chaque fois une couche thermoisolante intermédiaire (22), où le réservoir intérieur (20) et le réservoir extérieur (21) sont réalisés en matière plastique, et la couche thermoisolante (22) est configurée comme un corps calorifuge évacué.

2. Accumulateur de chaleur selon la revendication 1, **caractérisé par** un carter de boîte de vitesses rempli d'huile, en particulier un carter de boîte de vitesses automatique, où le carter de boîte de vitesses est utilisé en même temps comme un réservoir d'accumulateur de chaleur et conçu en conséquence.

3. Accumulateur de chaleur selon la revendication 1 ou 2, **caractérisé en ce que** le réservoir intérieur (20) est traversé, quand le moteur tourne, par le milieu respectif de l'accumulateur de chaleur, et, quand le moteur est à l'arrêt, peut être désaccouplé dans le sens d'un réservoir de chaleur pouvant être stocké en étant thermiquement isolé.

4. Accumulateur de chaleur selon l'une quelconque des revendications 1 à 3, **caractérisé en ce que** le corps calorifuge contient de la poudre de silice comprimée.

5. Accumulateur de chaleur selon l'une quelconque des revendications précédentes, **caractérisé en ce que** l'ouverture d'entrée est configurée comme une tubulure d'entrée (27, 35), et l'ouverture de sortie est configurée comme une tubulure de sortie (28, 36).

6. Accumulateur de chaleur selon l'une quelconque des revendications précédentes, **caractérisé en ce que** la tubulure d'entrée et / ou la tubulure de sortie est disposée au moins en partie entre le réservoir intérieur et extérieur.

7. Accumulateur de chaleur selon l'une quelconque des revendications précédentes, **caractérisé en ce que** l'accumulateur de chaleur comprend plusieurs chambres (38) qui sont reliées les unes aux autres en communiquant à chaque fois par au moins une ouverture (37).
